**Europäisches Patentamt**

**European Patent Office**

**Office européen des brevets**

(19)

(11) Veröffentlichungsnummer: **0 166 273 B1**

(12) # EUROPÄISCHE PATENTSCHRIFT

(45) Veröffentlichungstag der Patentschrift: **18.12.91**

(51) Int. Cl.⁵: **G06K 19/06**, G07F 7/08

(21) Anmeldenummer: **85106914.6**

(22) Anmeldetag: **04.06.85**

(54) **Sicherheitsdokumente und Verfahren zur Prüfung derselben.**

(30) Priorität: **06.06.84 DE 3421041**

(43) Veröffentlichungstag der Anmeldung:
**02.01.86 Patentblatt 86/01**

(45) Bekanntmachung des Hinweises auf die
Patenterteilung:
**18.12.91 Patentblatt 91/51**

(84) Benannte Vertragsstaaten:
**AT BE CH DE FR GB IT LI LU NL SE**

(56) Entgegenhaltungen:
**US-A- 3 652 862**
**US-A- 4 181 251**

(73) Patentinhaber: **GAO Gesellschaft für Automation und Organisation mbH**
**Euckenstrasse 12**
**W-8000 München 70(DE)**

(72) Erfinder: **Schneider, Walter, Dr.**
**Stadelbergstrasse 11**
**W-8160 Miesbach(DE)**

(74) Vertreter: **Klunker . Schmitt-Nilson . Hirsch**
**Winzererstrasse 106**
**W-8000 München 40(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Sicherheitsdokument, insbesondere Wertpapier, Banknote, Ausweiskarte oder dergl. mit einem Merkmal, das, beispw.in Form eines Sicherheitsfadens, im Inneren des Dokuments eingebettet und zur Erkennung der Echtheit des Dokuments maschinell prüfbar ist.

Es ist bekannt, Wertpapiere und andere geldwerte Produkte aus Papier-oder Kunststoffmaterialien durch das Einbetten von sogenannten Sicherheitsfäden gegen unbefugte Nachahmung zu schützen. Diese Sicherheitsfäden bestehen im allgemeinen aus schmalen Streifen einer Kunststoffoder Metallfolie, aus textilen Fäden, Drähten und ähnlichen Materialien.

Es ist auch bekannt (z. B. DE-A-14 46 851), Sicherheitsfäden zusätzlich mit speziellen Eigenschaften auszustatten, indem sie beispw. mit einer sehr feinen Schrift (einer sogenannten Micro-Schrift aus Buchstaben von ca. 0,4 mm Höhe) bedruckt werden, die dem Fälscher die Nachahmung zusätzlich erschwert. Ferner sind in diesem Zusammenhang flächige Überzüge aus farbigen Materialien bekannt.

Mit zunehmender Automatisierung ist man auch dazu übergegangen, die Sicherheitsfäden so zu gestalten, daß sie für eine maschinelle Prüfung geeignet sind. So werden Sicherheitsfäden beispw. mit Substanzen versehen, die unter UV-Licht fluoreszieren, die magnetische oder spezielle mit Röntgenstrahlen erkennbare Eigenschaften aufweisen (Siehe z. B. DE-A-27 54 267). Die Einbettung solcher Fäden in Banknoten oder andere Sicherheitsheitsdokumente bietet dann die Möglichkeit, mit geeigneten Prüfgeräten die Echtheit oder auch den wert eines Dokuments festzustellen.

Die maschinelle Überprüfung von Sicherheitsdokumenten, wie Ausweiskarten, Banknoten oder dergl. ist heute vor allem bei Geldausgabeautomaten, sog. POS-Terminals oder auch am Bankschalter erwünscht. Aber auch bei der automatischen Sortierung bzw. Bearbeitung von Banknoten oder ähnlichen geldwerten Produkten ist eine schnelle und maschinelle Überprüfung der Dokumente, beispw. bezüglich ihrer Echtheit oder auch ihres Wertes besonders sinnvoll und hilfreich.

Die Aufgabe der Erfindung besteht deshalb darin, ein für Sicherheitsdokumente geeignetes Merkmal, beispw. in der Form eines Sicherheitsfadens, vorzuschlagen, das auf vielfältige Art und Weise maschinell prüfbar ist.

Die Aufgabe wird durch die im kennzeichnenden Teil des Hauptanspruchs angegebenen Merkmale gelöst.

Die gemäß der Erfindung verwendeten, an sich bekannten Folien mit piezo- und/oder pyroelektrischen Eigenschaften sind beideitig mit einer elektrisch leitenden Beschichtung versehen. Aufgrund ihrer piezoelektrischen Eigenschaft entsteht bei einer mechanischen Verformung zwischen den leitenden Beschichtungen eine Potentialdifferenz. Legt man hingegen eine elektrische Spannung an die leitenden Beschichtungen, so führt dies zu einer Verformung der Folie. Viele der bekannten Piezofolien haben neben den piezoelektrischen auch pyroelektrische Eigenschaften d. h., daß bei Erwärmung der Folie ebenfalls eine Potentialdifferenz zwischen den leitenden Beschichtungen meßbar ist.

Die Folien sind flexibel und in Dicken von 10 - 50 m herstellbar. Sie lassen sich zu Fäden gewünschter Breite schneiden, die sich dann in hervorragender Weise wegen dieser guten mechanischen Eigenschaften zur Einlagerung in Banknoten, Ausweiskarten oder anderen Sicherheitsdokumenten eignen.

Der der Erfindung zugrundeliegende Gedanke, Folien mit piezo- und/oder pyroelektrischen Eigenschaften in Form von Sicherheitsfäden in Dokumente, wie Banknoten, Ausweiskarten oder andere geldwerte Produkte einzubetten, bietet eine besonders weite Palette an Überprüfungsmöglichkeiten. Die Vielfalt dieser Möglichkeiten erlaubt es, eine auf den jeweils automatisierten Bereich besonders gut angepaßte Prüfung anzuwenden, um die speziellen Eigenschaften des erfindungsgemäßen Merkmals nachzuweisen.

So ist es möglich, die durch eine mechanische Verformung des Sicherheitsfadens entstehende piezoelektrische Spannung zu messen und auszuwerten. Das Sicherheitsdokument kann dazu in Richtung des Sicherheitsfadens gebogen oder kurzen mechanischen Stössen ausgesetzt werden. Die dabei entstehende Gleich- bzw. Wechselspannung ist dann über die auf der Folie befindlichen leitenden Beschichtungen, die als Elektroden dienen, berührend oder berührungslos (z. B. kapazitiv) abgreifbar.

Weiterhin können auch die pyroelektrischen Eigenschaften zur maschinellen Überprüfung herangezogen werden. In diesem Falle ist es notwendig, zunächst die den Sicherheitsfaden enthaltende Zone des Dokuments zu erwärmen. Dies geschieht zweckmäßigerweise durch die Einstrahlung von infrarotem Licht geeigneter Wellenlänge. Ebenso sind Mikrowellen ein geeignetes Mittel zur Erhitzung der Fäden, da diese von dem Folienmaterial gut absorbiert werden.

Diese auf mechanisch- bzw. thermisch-elektrische Wandlung beruhenden Verfahren eignen sich z. B. zur Prüfung von Ausweiskarten oder Banknoten in Geldausgabeautomaten oder Verkaufsautomaten, da hier die Prüfung stationär erfolgt, d. h. die Sicherheitsdokumente sind während der Prüfung in Ruhe. Die zur Prüfung notwendigen mechanischen und elektrischen Bauteile lassen sich in vergleichsweise kleinen Gehäusen unterbringen, so daß die Prüfung auch mit einfachen Handgeräten vorgenommen werden kann, die dann z. B. an Bankschaltern oder an Verkaufsstellen in Kaufhäusern etc. benutzbar sind.

In automatischen Sortier- oder Belegverarbeitungsanlagen ist eine schnell ablaufende berührungslose Prüfung vorteilhaft, da die Dokumente mit hoher Geschwindigkeit verarbeitet werden. In diesem Fall ist es beispw. möglich, die Sensitivität der Piezofolie auf ein Ultraschallfeld zu nutzen, um den Sicherheitsfaden auf seine piezoelektrischen Eigenschaften zu prüfen. Die durch ein Ultraschallfeld hervorgerufene Deformation der Piezofolie führt zur Entstehung einer Wechselspannung, die über entsprechend angeordnete Kondensatorplatten von den leitenden Beschichtungen der Folie berührungslos abgetastet werden kann. Ebenso ist es möglich, über die Kodensatorplatten eine Wechselspannung auf die leitenden Beschichtungen der Piezofolie zu übertragen. Die Piezofolie wird dadurch in Schwingungen versetzt und sendet frequenzgleiche Schallwellen aus, die über geeignete Detektoren, z. B. Mikrofone, erfaßt werden.

Neben den genannten Methoden, die infolge der piezo- und pyroelektrischen Eigenschaften sich ergebenden Effekte nach mechanischer, thermischer oder elektrischer Anregung für die Prüfung zu nutzen, ist es zusätzlich möglich, weitere physikalische Eigenschaften des erfindungdungsgemäßen Merkmals, wie beispw. die Leitfähigkeit seiner leitenden Beschichtung oder dessen optische Transparenz zu überprüfen. Bezieht man mehrere Eigenschaften bei gleichzeitiger Wichtung der Einzelergebnisse in die Echtheitsüberprüfung mit ein, so kann einerseits die Erkennungssicherheit erhöht, andererseits aber auch der zur Nachahmung durch Fälscher notwendige Aufwand auf ein Mehrfaches angehoben werden.

Weitere Vorteile und Weiterbildungen der Erfindung ergeben sich aus den Unteranspüchen sowie aus den Ausführungsbeispielen, die nachstehend anhand der Zeichnung näher erläutert werden.

Darin zeigen:

Fig. 1    ein erfindungsgemäßes Sicherheitsdokument in Aufsicht,

Fig. 2    ein erfindungsgemäßes Sicherheitsdokument im Schnitt,

Fig. 3    eine schematische Darstellung einer Prüfvorrichtung und

Fig. 4, 5    schematische Darstellungen weiterer erfindungsgemäßer Prüfvorrichtungen.

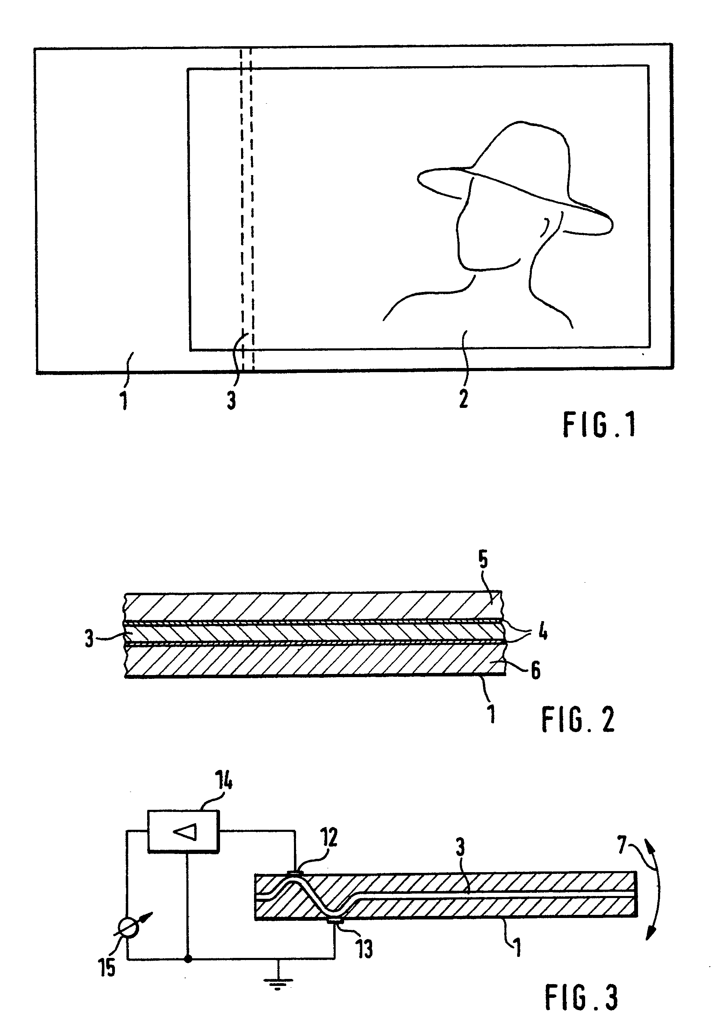

Die Fig. 1 zeigt ein Wertpapier 1 mit einem Druckbild 2. Im Inneren des Wertpapiers ist ein Sicherheitsfaden 3 eingebettet. Dieser Sicherheitsfaden besteht aus einer streifenförmig geschnittenen polymeren Folie mit piezo- und/oder pyroelektrischen Eigenschaften. Die Einbettung des Sicherheitsfadens in das Wertpapier, beispw. in eine Banknote, erfolgt während der Herstellung der Note nach den aus der Wertpapiertechnik bekannten Verfahren. Bei Ausweiskarten, die sich in der Regel aus mehreren Kunststoffschichten zusammensetzen, wird der Sicherheitsfaden zwischen zwei dieser Schichten eingelegt, die dann vollflächig in einem Kalt-oder Heißkaschierverfahren miteinander verbunden werden. Beim Heißkaschierverfahren ist darauf zu achten, daß die physikalischen Eigenschaften des eingelegten Sicherheitsfadens nicht durch zu hohe Temperaturen beeinträchtigt werden. Der so in ein Wertpapier oder in eine Ausweiskarte eingebettete Sicherheitsfaden bietet bei visueller Prüfung für den Beobachter keine Besonderheiten, da Fäden gleichen oder ähnlichen Aussehens in Banknoten allseits bekannt sind.

Die Fig. 2 zeigt einen Schnitt durch ein Wertpapier 1 mit zwischen den Papierschichten 5 und 6 eingebettetem Sicherheitsfaden 3. Die Dickenverhältnisse sind wegen der besseren Anschaulichkeit nicht maßstabsgerecht dargestellt.

Der Sicherheitsfaden hat eine Dicke von 10 - 50 $\mu$m, vorzugsweise 15 - 30 $\mu$m. Die Blattstärke des Wertpapiers liegt bei ca. 100 $\mu$m. Die Breite solcher Sicherheitsfäden beträgt üblicherweise 0,4 - 1,5 mm, wobei vorzugsweise Werte im Bereich 0,6 - 1,0 mm verwendet werden. Das Folienmaterial ist beidseitig mit leitenden Beschichtungen (Metallisierungen) 4 versehen, um elektrische Ladungen auf das Material aufzubringen oder von diesem abzuleiten. Die leitenden Beschichtungen 4 können durch Bedampfen, Laminieren oder andere geeignete Verfahren in vollflächiger oder unterbrochener Form auf die Folien aufgebracht werden. Ebenso ist eine Bedampfung mit transparenten halbleitenden Metalloxyden möglich. Auf solche Weise hergestellte Sicherheitsfäden bleiben dann durchsichtig und sind im Papier oder einem sonstigen geldwerten Zahlungsmittel nur schwierig oder unter Umständen gar nicht zu erkennen.

Ein für die erfindungsgemäße Anwendung geeignetes Folienmaterial mit piezo- und pyroelektrischen Eigenschaften ist z. B. Polyvinylidenfluorid (PVDF). Es weist unter den bisher bekannten Stoffen die größten piezo- und pyroelektrischen Koeffizienten auf. PVDF kristallisiert in drei verschiedenen Phasen $\alpha$, $\beta$ und $\gamma$. Die allgemeine Phase $\alpha$, in der der Stoff bei der Abkühlung aus der Schmelze kristallisiert, hat nichtpolaren Charakter, so daß hier keine piezoelektrischen Eigenschaften auftreten. Über eine mechanische Verformung der Folie, wobei diese in ein oder zwei Richtungen gereckt wird und die polymeren Ketten dadurch ausgerichtet werden, wird der Stoff in die $\beta$-Phase umgewandelt. Zur Polarisierung wird das Folienmaterial beidseitig mit elektrisch leitendem Material beschichtet. Die so mit leitenden Beschichtungen versehene Folie wird dann einem elektrischen Feld von ca. 1 MV/cm ausgesetzt, auf 80 - 120°C erwärmt und unter Aufrechterhaltung des Feldes abgekühlt. Die Polarisation wird durch diesen Vorgang "eingefroren" und die Folie weist dann die gewünschten piezo- und pyroelektrischen Eigenschaften auf.

Die oben erwähnten, beispw. in Form von Fäden in Sicherheitsdokumente eingebrachten Folienstücke können anhand einer Vielzahl verschiedener Methoden geprüft werden. So ist es möglich, auf den Faden einwirkende mechanische Energie in Form von mechanischen Spannungen, Stößen oder Schwingungen innerhalb des Sicherheitsfadens in elektrische Energie umzusetzen. Diese läßt sich im Falle einer Biegung des Fadenmaterials als Gleichspannung, im Falle von Stößen als elektrischer Spannungsimpuls, im Falle von Schwingungen als frequenzgleiche Wechselspannung von dem Faden abgreifen. Zum Abgriff der Spannungen kann ein berührendes Verfahren gewählt werden.

Um eine direkte Kontaktierung zu erleichtern, kann der Sicherheitsfaden so eingebettet werden, daß ein für die Kontaktierung ausreichender Bereich auf dem Sicherheitsfaden frei zugängig ist. Der Sicherheitsfaden ist hierfür nach bekannten Verfahren so einzubetten, daß bei jedem Einzelnutzen einer Papierbahn eine beidseitige Kontaktierung möglich ist.

Bei mehrschichtigen Ausweiskarten bietet sich die Möglichkeit, die Enden des Sicherheitsfadens auf die Oberfläche des Laminats herauszuführen. Eine weitere Möglichkeit wäre z. B. die den Sicherheitsfaden überlagernden Deckschichten mit entsprechenden Fenstern zu versehen, die entweder frei bleiben oder mit elektrisch leitendem Material gefüllt werden. Im letzteren Fall zeigt die Karte eine durchgehend glatte Oberfläche, um einer eventuellen Verschmutzung der Fenster vorzubeugen.

In der Fig. 3 ist schematisch eine Prüfvorrichtung gezeigt, mit der eine durch eine mechanische Biegung des Fadens entstehende piezoelektrische Spannung meßbar ist. Dazu werden auf die leitenden Beschichtungen 4 des Sicherheitsfadens 3 Elektroden 12, 13 aufgesetzt. Die Elektroden sind, beispw. über einen Ladungsverstärker 14, mit einem Meßgerät 15 verbunden. Über eine in der Fig. nicht gezeigte Biegevorrichtung wird der Streifen beispw. in Richtung des Pfeils 7 einmal oder mehrmals gebogen. Die durch die mechanische Verformung des Fadens verursachte piezoelektrische Spannung kann dann mit Hilfe des Meßgeräts angezeigt werden.

Relativ hohe Spannungen lassen sich bei Verwendung sogenannter bimorpher Folien erreichen. Diese Folien setzen sich aus zwei übereinander angeordneten, einachsig gereckten Piezofolien zusammen, deren Polarisationsrichtungen entgegengesetzt sind. Die erreichbaren Spannungen V lassen sich nach folgender Formel berechnen:

$$V = \frac{3 \cdot g_{31} \cdot Y \cdot t^2 \cdot S}{16 \cdot L^2}$$

V = Spannung
$g_{31}$ = piezoelektrische Dehnungskonstante
Y = Young's Modulus
t = Dicke der Folie
L = Länge der Folie
S = Auslenkung des freien Endes

Unter Verwendung einer PVDF-Folie (Polyvinylidenfluorid) mit $g_{31}$ = 0,17 Vm/N; Y = 2,7 10 N/m² und einer Dicke von 30 μm und einer Länge von 70 mm ergeben sich bei einer Auslenkung des freien Endes um 3 cm Spannungen von ca. 4 V.

Die in der Fig. 3 gezeigte Meßanordnung kann auch zur Auswertung des pyroelektrischen Effektes herangezogen werden. In diesem Fall wird statt der mechanischen Verformung die Folie erwärmt. Als Wärmequellen können z. B. IR- oder Mikrowellenstrahler verwendet werden. Die erreichbaren pyroelektrischen Spannungen sind proportional zur Temperaturänderung des Folienstreifens und lassen sich nach folgender Formel berechnen:

$$V = \frac{p \cdot t \cdot \Delta T}{\varepsilon}$$

V = Spannung,
p = pyroelektrischer Koeffizient
t = Dicke
ΔT = Temperaturänderung
ε = Dielektrizitätskonstante

Bei Verwendung von PVDF-Folien (ε = 15, p = -40 μC/m K) mit einer Dicke von 10 μm ergibt eine Temperaturänderung um 1°C eine pyroelektrische Spannung von ca. 3,5 V. Die metallische Beschichtung der Folie kann zur Erhöhung der Absorption der einfallenden Strahlung entsprechend ausgebildet sein. Geeignete Beschichtungsmaterialien sind z.B. geschwärzte Gold- oder Wismuth-Schichten; die sich durch ein hohes breitbandiges Absorptionsverhalten und durch ihre gute elektrische Leitfähigkeit auszeichnen.

Andererseits ist es auch möglich, die Piezofolie auf einer Seite mit einer dünnen transparenten oder semitransparenten leitenden Beschichtung zu versehen. In diesem Fall dringt die einfallende Strahlung in das polymere Material ein, wobei unter Ausnutzung der starken Absorption des polymeren Materials (PVDF) im Wellenlängenbereich von 8 - 11 µm eine schnelle Temperaturänderung erreichbar ist Die gegenüberliegende metallische Beschichtung der Folie sollte dann eine gut reflektierende Schicht sein, so daß der transmittierte Anteil der Strahlung wieder in das Material reflektiert wird.

Neben der berührenden Messung einer piezo- oder pyroelektrischen Spannung zwischen den leitenden Beschichtungen von polymeren Folien ist es auch möglich, die Ladungen bzw. Spannungen berührungslos, beispw. kapazitiv, auszuwerten.

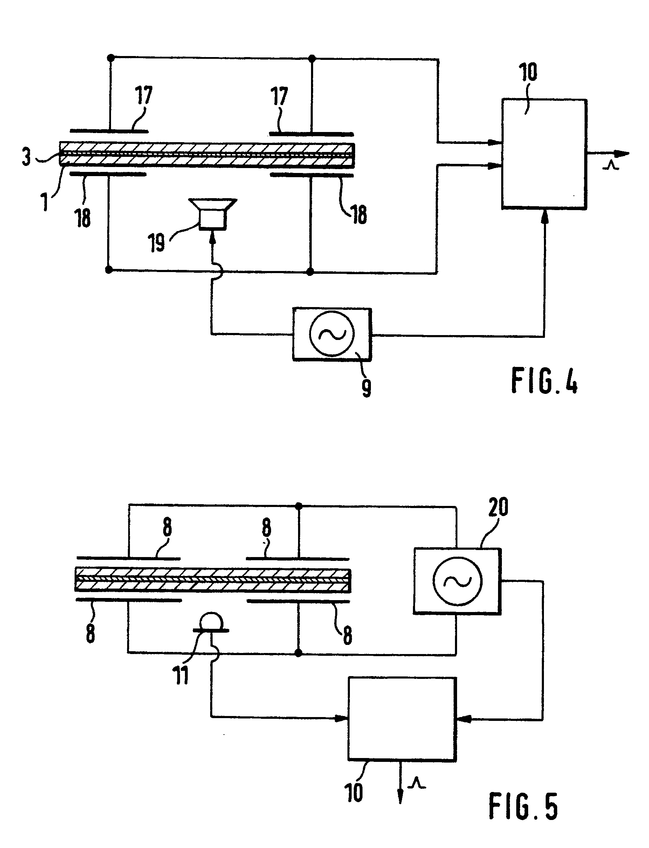

Eine weitere Möglichkeit besteht darin, wie in Fig. 4 gezeigt, Schallenergie mit Hilfe eines, durch einen Generator 9 angesteuerten Senders 19 auf den Faden einwirken zu lassen. In diesem Fall entsteht an dem Sicherheitsfaden eine der Schallfrequenz analoge Wechselspannung, welche zur Identifizierung herangezogen werden kann. Als besonders vorteilhaft erweist es sich dabei, Schallfrequenzen im Bereich des Ultraschalls, also mit einer Frequenz von etwa 40 - 400 kHz auf den Sicherheitsfaden einwirken zu lassen. Die dabei entstehenden hochfrequenten Wechselspannungen lassen sich wirkungsvoll berührungslos aus dem Fadenmaterial auskoppeln. Hierzu sind zwei oder mehr seriell geschaltete Kondensatorplatten 17, 18 in geeigneter Weise entlang des Sicherheitsfadens 3 zu plazieren, so daß diese durch die entstehende elektrische Influenz mit der hochfrequenten Wechselspannung beaufschlagt werden. Dabei erscheint es zweckmäßig, die Kondensatoren mit einer Induktivität oder einem Ohm'schen Widerstand zusammenzuschalten, um einen auf die Frequenz des Senders abstimmbaren Resonanzkreis zu erhalten.

Über ein Korrelationsglied 10 können Sender- und Empfangssignale so verarbeitet werden, daß Fremd- oder Störanteile bei der Auswertung der empfangenen Meßsignale ausgeschaltet bzw. unterdrückt werden. Da ein großer Anteil der Schallwellen von der Oberfläche des Papiers reflektiert wird, ist es möglich, die Ultraschallquelle auch direkt auf die Papieroberfläche aufzusetzen, um somit den verlustreichen Übergang Luft - Papier zu vermeiden.

Im Gegensatz zum gerade beschriebenen Verfahren ist es auch möglich, elektrische Spannungen oder elektrische Wechselfelder auf das Fadenmaterial einwirken zu lassen. Die notwendigen elektrischen Spannungen werden mittels eines Generators 20 erzeugt und direkt an die leitenden Beschichtungen der Piezofolie angelegt oder kapazitiv eingekoppelt. Im letzteren Fall werden längs des Sicherheitsfadens Kondensatorplatten 8 angeordnet bzw. das Sicherheitspapier wird zwischen zwei Kondensatorplatten 8 hindurchgeführt. Beim Durchgang des Sicherheitsfadens durch das zwischen den Kondensatorplatten aufgebaute elektrische Wechselfeld wird der Sicherheitsfaden periodisch deformiert und zur Aussendung von Schallfrequenzen angeregt. Dabei ist es sinnvoll, eine elektrische Wechselspannung von beispielsweise 50 kHz auf den Sicherheitsfaden aus piezoelektrischem Material einwirken zu lassen, welcher dann eine frequenzgleiche Schallwelle aussendet. Zur Entdeckung der ausgesandten Schallfrequenzen sind dann Detektoren 11 geeignet, welche nach dem Prinzip der Mikrophone aufgebaut sind. Je nach den Dimensionen des Sicherheitsfadens werden dabei auch höhere harmonische der eingestrahlten Frequenz entstehen, welche somit von den Dimensionen des Fadens abhängig sind und eine Identifizierung desselben erlauben.

Ähnlich dem vorher beschriebenen Prüfverfahren können auch hier das Erregersignal und das Meßsignal in einem entsprechenden Korrelationsglied 10 zur Auswertung unter Ausschließung von Fremd- bzw. Störeinflüssen korreliert werden.

Die durch ein Ultraschallfeld erzeugte Piezospannung kann weiterhin auch dazu benutzt werden, ein magnetisches Wechselfeld zu erzeugen. Die Elektroden der Piezofolie sind dabei mit einer Leiterschleife verbunden. Die Leiterschleife, die z. B. auch aus mehreren konzentrisch angeordneten Schleifen bestehen kann, wird z. B. auf einer Seite der Piezofolie durch eine selektive Beschichtung der Folie mit elektrisch leitendem Material aufgebracht. Das unter dem Einfluß eines Ultraschallfeldes entstehende elektromagnetische Feld kann dann z. B. beim Durchgang durch entsprechend angeordnete Helmholtzspulen detektiert werden. Auch dieses Prüfverfahren ermöglichst somit eine schnelle und berührungslose Prüfung.

Die Meßergebnisse der piezo- bzw. pyroelektrischen Eigenschaften können bei der Auswertung mit anderen Meßergebnissen, wie z. B. mit dem Ergebnis einer Leitfähigkeitsmessung der Folienbeschichtung oder mit Ergebnissen einer Prüfung der optischen Eigenschaften der Folie (Transparenz in verschiedenen Spektralbereichen), kombiniert werden.

Die Verknüpfung verschiedener Einzelergebnisse, eventuell bei gleichzeitiger Wichtung, erhöht den für eine Nachahmung des Merkmals notwendigen Aufwand, da die Folie in diesem Fall mehrere Bedingungen gleichzeitig erfüllen muß.

## Patentansprüche

1.   Sicherheitsdokument, insbesondere Wertpapier, Banknote, Ausweiskarte oder dergleichen, mit eingebettetem faden- oder blattförmigem Element, das eine maschinell überprüfbare phyikalische Eigenschaft aufweist, die der Echtheitserkennung des Dokuments dient, dadurch **gekennzeichnet,** daß das Element ein aus einem polymeren Kunststoff bestehendes Folienstück (3) ist, das piezo- und/oder pyroelektrische Eigenschaften aufweist.

2. Sicherheitsdokument nach Anspruch 1, dadurch **gekennzeichnet,** daß das Folienstück (3) beidseitig elektrisch leitende Beschichtungen (4) aufweist.

3. Sicherheitsdokument nach Anspruch 2, dadurch **gekennzeichnet,** daß das polymere Material des Foliensstücks (3) Polyvinylidenfluorid (PVDF) ist.

4. Sicherheitsdokument nach Anspruch 1, dadurch **gekennzeicht,** daß das Folienstück (3) eine Dicke von 10 - 50 $\mu$m, vorzugsweise 15 - 30 $\mu$m, aufweist.

5. Sicherheitsdokument nach Anspruch 2, dadurch **gekennzeichnet,** daß das Folienstück (3) so eingebettet ist, daß die leitenden Beschichtungen (4) zum Teil an der Oberfläche des Dokumments (1) liegen.

6. Sicherheitsdokument nach Anspruch 1, dadurch **gekennzeichnet,** daß das Folienstück (3) zwischen Kunststoffschichten eingelagert ist und in einem Teilbereich des Folienstückes Fenster in den besagten Kunststoffschichten vorgesehen sind.

7. Sicherheitsdokument nach Anspruch 2, dadurch **gekennzeichnet,** daß die leitende Beschichtung (4) auf mindestens einer Seite geschwärzt ist.

8. Sicherheitsdokument nach Anspruch 2, dadurch **gekennzeichnet,** daß die leitende Beschichtung (4) auf einer Seite des Folienstücks (3) eine transparente Halbleiterschicht ist.

9. Sicherheitsdokument nach Anspruch 8, dadurch **gekennzeichnet,** daß die leitende Beschichtung (4) der gegenüberliegenden Seite des Folienstücks (3) reflekierende Eigenschaften aufweist.

10. Sicherheitsdokument nach Anspruch 8, dadurch **gekennzeichnet,** daß die leitenden Beschichtungen (4) beidseitig transparente Halbleiterschichten sind.

11. Verfahren zur Prüfung eines Sicherheitsdokuments gemäß Anspruch 1, dadurch **gekennzeichnet,** daß das im Sicherheitsdokument eingelagerte Folienstück aus polymerem Material mit mechanischer, thermischer oder elektrischer Energie beaufschlagt wird und die sich infolge der piezo- bzw. pyroelektrischen Eigenschaften des Folienstücks ergebenden Effekte über geeignete Detektoren geprüft werden.

12. Verfahren nach Anspruch 11, dadurch **gekennzeichnet,** daß das im Sicherheitsdokument eingelagerte Folienstück mittels einer Biege- oder Druckvorrichtung mechanisch verformt wird und die dabei entstehende piezoelektrische Spannung über beidseitig auf das Folienstück aufgebrachte leitende Beschichtungen abgegriffen wird.

13. Verfahren nach Anspruch 12, dadurch **gekennzeichnet,** daß die Verformung mehrmals hintereinander durchgeführt und die dabei entstehenden piezoelektrischen Spannungsimpulse gemessen und ausgewertet werden.

14. Verfahren nach Anspruch 11, dadurch **gekennzeichnet,** daß das Folienstück erwärmt wird und die dabei an den leitenden Beschichtungen auftretende pyroelektrische Potentialdifferenz gemessen und ausgewertet wird.

15. Verfahren nach Anspruch 14, dadurch **gekennzeichnet,** daß die Erwärmung durch Einstrahlung von elektromagnetischen Wellen des IR- oder Mikrowellenbereichs erfolgt.

16. Verfahren nach einem der Ansprüch 12, 13 und 14, dadurch **gekennzeichnet,** daß die piezo- bzw. pyroelektrische Spannung berührungslos abgegriffen wird.

17. Verfahren nach Anspruch 11, dadurch **gekennzeichnet,** daß das Folienstück einem Ultraschallfeld, vorzugsweise im Frequenzbereich von 40 - 400 kHz, ausgesetzt wird und die dabei durch die mechanische Verformung entstehende frequenzgleiche Wechselspannung an den leitenden Beschichtungen des Folienstücks gemessen und ausgewertet wird.

18. Verfahren nach Anspruch 17, dadurch **gekennzeichnet,** daß die frequenzgleiche Wechselspannung über im Bereich des Folienstücks angeordnete Kondensatorplatten berührungslos ausgekoppelt wird.

19. Verfahren nach Anspruch 11, dadurch **gekennzeichnet,** daß das Folienstück einem elektrischen Wechselfeld ausgesetzt und die dabei vom Folienstück ausgehenden Schallwellen über einen entsprechenden Empfänger gemessen und ausgewertet werden.

20. Verfahren nach Anspruch 19, dadurch **gekennzeichnet,** daß das elektrische Wechselfeld über im Bereich des Folienstücks angeordnete Kondensatorplatten eingekoppelt wird.

21. Verfahren nach Anspruch 11, dadurch **gekennzeichnet,** daß die über die entsprechenden Detektoren empfangenen Meßsignale mit den, die piezo- oder pyroelektrischen Effekte hervorrufenden Anregungssignalen zur Auswertung korreliert werden.

22. Verfahren nach Anspruch 11, dadurch **gekennzeichnet,** daß zusätzlich zur Prüfung der piezo- bzw. pyroelektrischen Eigenschaften weitere physikalische Eigenschaften des eingelagerten Folienstücks überprüft werden, wie beispw. dessen Leitfähigkeit und/oder dessen optische Transparenz und daß ein oder mehrere Meßergebnisse allein oder in Kombination mit vorgegebenen Sollwerten verglichen werden.

## Claims

1. A security document, in particular a paper of value, bank note, identity card or the like, having an embedded element in the form of a thread or sheet which exhibits a machine-testable physical property permitting detection of the authenticity of the document, **characterized** in that the element is a piece of film (3) consisting of a polymeric plastic and exhibiting piezoelectric and/or pyroelectric properties.

2. The security document of claim 1, **characterized** in that the piece of film (3) exhibits electrically conductive coatings (4) on each side.

3. The security document of claim 2, **characterized** in that the polymeric material of the piece of film (3) is polyvinylidene fluoride (PVDF).

4. The security document of claim 1, **characterized** in that the piece of film (3) has a thickness of 10 to 50 $\mu$m, preferably 15 to 30 $\mu$m.

5. The security document of claim 2, **characterized** in that the piece of film (3) is embedded in such a way that the conductive coatings (4) lie partly on the surface on the document (1).

6. The security document of claim 1, **characterized** in that the piece of film (3) is embedded between plastic layers, and windows are provided in said plastic layers in a partial area of the piece of film.

7. The security document of claim 2, **characterized** in that the conductive coating (4) is blackened on at least one side.

8. The security document of claim 2, **characterized** in that the conductive coating (4) is a transparent semiconductor layer on one side of the piece of film (3).

9. The security document of claim 8, **characterized** in that the conductive coating (4) on the opposite side of the piece of film (3) has reflecting properties.

10. The security document of claim 8, **characterized** in that the conductive coatings (4) are transparent semiconductor layers on each side.

11. A method for testing the security document of claim 1, **characterized** in that the piece of film made of polymeric material and embedded in the security document is subjected to mechanical, thermal or electric energy, and the effects which come about due to the piezoelectric and/or pyroelectric properties of the piece of film are tested via appropriate detectors.

12. The method of claim 11, **characterized** in that the piece of film embedded in the security document is mechanically deformed by means of a bending or pressure device, and the resulting piezoelectric voltage is picked up via conductive coatings provided on each side of the piece of film.

13. The method of claim 12, **characterized** in that the deformation is carried out several times successively and the resulting piezoelectric voltage pulses are measured and evaluated.

14. The method of claim 11, **characterized** in that the piece of film is heated and the pyroelectric potential difference resulting on the conductive coatings is measured and evaluated.

15. The method of claim 14, **characterized** in that the heating is carried out by irradiating electromagnetic waves of the IR or microwave range.

16. The method of any of claims 12, 13 and 14, **characterized** in that the piezoelectric or pyroelectric voltage is picked up without contact.

17. The method of claim 11, **characterized** in that the piece of film is subjected to an ultrasonic field, preferably in the frequency range of 40 to 400 kHz, and the a.c. voltage of equal frequency arising on the conductive coatings due to the mechanical deformation is measured and evaluated.

18. The method of claim 17, **characterized** in that the a.c. voltage of equal frequency is coupled out without contact via capacitor plates disposed in the area of the piece of film.

19. The method of claim 11, **characterized** in that the piece of film is subjected to an electric a.c. field and the resulting sound waves emitted by the piece of film are measured and evaluated via an appropriate receiver.

20. The method of claim 19, **characterized** in that the electric a.c. field is coupled in via capacitor plates disposed in the area of the piece of film.

21. The method of claim 11, **characterized** in that the measuring signals received via the corresponding detectors are correlated for evaluation with the excitation signals which cause the piezoelectric or pyroelectric effects.

22. The method of claim 11, **characterized** in that not only piezoelectric or pyroelectric properties of the embedded piece of film are tested, but also further physical properties such as its conductivity and/or its optical transparency, and that one or more measuring results are compared alone or in combination with predetermined desired values.

**Revendications**

1. Documents de sécurité, notamment titre, billet de banque, carte d'identité, etc., à élément incorporé sous forme de fil ou de feuille présentant une propriété physique contrôlable mécaniquement servant à déterminer l'authenticité du document, caractérisé en ce que l'élément est un fragment de feuille (3) en matière plastique polymère présentant des propriétés piézoélectriques et/ou pyroélectriques.

2. Document de sécurité selon la revendication 1, caractérisé en ce que le fragment de feuille (3) présente sur ses deux faces des couches (4) conductrices de l'électricité.

3. Document de sécurité selon la revendication 2, caractérisé en ce que le matériau polymère du fragment de feuille (3) est du fluorure de polyvinylidène (PVDF).

4. Document de sécurité selon la revendication 1, caractérisé en ce que le fragment de feuille (3) présente une épaisseur comprise entre 10 et 50 $\mu$m, de préférence entre 15 et 30 $\mu$m.

5. Document de sécurité selon la revendication 2, caractérisé en ce que le fragment de feuille (3) est incorporé de façon telle que les couches conductrices (4) se trouvent en partie à la surface du document (1).

6. Document de sécurité selon la revendication 1, caractérisé en ce que le fragment de feuille (3) est incorporé entre des couches en matière plastique et que des fenêtres sont prévues dans lesdites couches en matière plastique, dans une zone partielle du fragment de feuille.

7. Document de sécurité selon la revendication 2, caractérisé en ce que la couche conductrice (4) est noircie sur au moins une face.

8. Document de sécurité selon la revendication 2, caractérisé en ce que la couche conductrice (4) sur une face du fragment de feuille (3) est une couche semi-conductrice transparente.

9. Document de sécurité selon la revendication 8, caractérisé en ce que la couche conductrice (4) de la face opposée du fragment de feuille (3) présente des propriétés réfléchissantes.

10. Document de sécurité selon la revendication 8, caractérisé en ce que les couches conductrices (4) sont sur les deux faces des couches semi-conductrices transparentes.

11. Procédé de contrôle d'un document de sécurité selon la revendication 1, caractérisé en ce que le fragment de feuille en matériau polymère incorporé dans le document de sécurité est soumis à une énergie mécanique, thermique ou électrique et que les effets obtenus par suite des propriétés piézoélectriques ou pyroélectriques du fragment de feuille sont contrôlés par des détecteurs appropriés.

12. Procédé selon la revendication 11, caractérisé en ce que le fragment de feuille incorporé dans le document de sécurité est déformé mécaniquement à l'aide d'un dispositif de pliage ou de compression et que la tension piézoélectrique ainsi créée est détectée par l'intermédiaire des couches conductrices déposées sur les deux faces du fragment de feuille.

13. Procédé selon la revendication 12, caractérisé en ce que la déformation est réalisée successivement à plusieurs reprises et que les impulsions piézoélectriques ainsi créées sont mesurées et évaluées.

14. Procédé selon la revendication 11, caractérisé en ce que le fragment de feuille est chauffé et que la différence de potentiel pyroélectrique créée ainsi sur les couches conductrices est mesurée et évaluée.

15. Procédé selon la revendication 14, caractérisé en ce que l'échauffement est obtenu par incidence d'ondes électromagnétiques du domaine IR ou hyperfréquence.

16. Procédé selon l'une des revendications 12, 13 et 14, caractérisé en ce que la tension piézoélectrique ou pyroélectrique est détectée sans contact.

17. Procédé selon la revendication 11, caractérisé en ce que le fragment de feuille est exposé à un champ ultrasonore, de préférence dans le domaine de fréquences compris entre 40 et 400 kHz et que la tension alternative de même fréquence créée par la déformation mécanique est mesurée et évaluée sur les couches conductrices du fragment de feuille.

18. Procédé selon la revendication 17, caractérisé en ce que la tension alternative de même fréquence est détectée sans contact par des plaques de condensateur disposées dans la zone du fragment de feuille.

19. Procédé selon la revendication 11, caractérisé en ce que le fragment de feuille est exposé à un champ électrique alternatif et que les ondes sonores émises par le fragment de feuille sont mesurées et évaluées par un récepteur correspondant.

20. Procédé selon la revendication 19, caractérisé en ce que le champ électrique alternatif est détecté par des plaques de condensateur disposées dans la zone du fragment de feuille.

21. Procédé selon la revendication 11, caractérisé en ce que les signaux de mesure reçus par l'intermédiaire des détecteurs correspondants sont corrélés pour l'évaluation avec les signaux excitateurs provoqués par les effets piézoélectriques ou pyroélectriques.

22. Procédé selon la revendication 11, caractérisé en ce que d'autres propriétés physiques du fragment de feuille incorporé sont contrôlées, par exemple sa conductibilité et/ou sa transparence optique, en plus du contrôle des propriétés piézoélectriques ou pyroélectriques, et qu'on peut comparer un ou plusieurs résultats de mesure seuls ou groupés, à des valeurs théoriques prédéfinies.

FIG.1

FIG. 2

FIG.3

FIG.4

FIG.5